# EUROPEAN PATENT SPECIFICATION

(11) **EP 1 361 296 B1**
(45) Date of publication and mention of the grant of the patent: **26.07.2006**
(21) Application number: 01909833.4
(22) Date of filing: 16.02.2001
(51) Int. Cl.: C25C 1/16

(54) **METHOD FOR ELECTROLYTIC PRODUCTION OF ULTRA-PURE ZINC OR ZINC COMPOUNDS FROM ZINC PRIMARY AND SECONDARY RAW MATERIALS**
VERFAHREN ZUR ELEKTROLYTISCHEN HERSTELLUNG VON ULTRAREINEM ZINK ODER ULTRAREINEN ZINKVERBINDUNGEN AUS PRIMÄREN UND SEKUNDÄREN ZINKROHSTOFFEN
PROCEDE DE PRODUCTION ELECTROLYTIQUE DE ZINC OU DE COMPOSES DE ZINC A HAUTE PURETE A PARTIR DE MATIERES BRUTES PRIMAIRES ET SECONDAIRES DE ZINC

(43) Date of publication of application: 12.11.2003
(73) Proprietor: Tecnicas Reunidas, S.A., 28015 Madrid (ES)
(72) Inventor: MARTIN SAN LORENZO, Daniel, E-28801 Alcala de Henares (ES); DIAZ NOGUEIRA, Gustavo, E-28807 Alcala de Henares (ES); GARCIA LEON, Miguel Angel, E-28032 Madrid (ES)
(74) Representative: Garcia-Cabrerizo y del Santo, Pedro Maria
(86) International application number: PCT/ES2001/000060
(87) International publication number: WO 2002/066708

(56) References cited:
- EP-A- 0 939 138
- ES-A- 8 204 696
- ES-A- 8 401 779
- ES-B3- 2 025 141

## Description

This invention relates to an improved process to produce zinc or its compounds, all of them ultra-pure, by a hydrometallurgical process starting from zinc primary and/or secondary raw materials through a new combination of purification loops incorporating barriers to impurities.

These barriers, according to the invention, consist of the combination of treatments that restrict the production or transport of impurities from the raw materials or from the outside to the product and/or permit their removal through successive depletions, and/or check the presence of impurities in the product, and/or prevent recontamination.

### STATE OF THE ART

Several patented processes exist concerning the hydrometallurgical treatment of zinc primary and/or secondary raw materials. These processes, operating by employing appropriate means, are targeted towards the production of electrolytic zinc or zinc compounds. The ultimate objective of these processes is to produce zinc of the highest degree of purity.

The "Roast, leach and electrowin" process (RLE) treats primary raw materials, normally zinc sulphide concentrates. Roasting the concentrates leads to the production of an impure zinc oxide (calcine) and SO₂ gas which is converted into sulphuric acid. The calcine is then leached with a sulphuric acid solution recycled from the electrowinning stage.

The separation of the leaching pulp produces an impure solution. This impure solution is purified by cementation with zinc powder. The purified solution is sent to zinc electrowinning to produce the zinc plates, which are sent to the melting and casting stage. However, impurity concentration levels low enough to achieve extreme quality electrowinning are not achieved. This implies the production of zinc which is not ultra-pure, unless other difficult and/or expensive additional stages are applied.

Other generic processes use, in a first step, the acid leaching of the raw material to dissolve the zinc, then, in a second step, the selective extraction of the dissolved zinc present in the solution by means of an organic acid solvent which acts as an extractant (with pH control in some of them), in a third stage, the zinc-laden organic acid is treated to recover this zinc in the form of an aqueous solution and regenerate the organic solvent to be subsequently recycled.

A first process (US 4, 401, 531) discloses the acid hydrometallurgic treatment of the zinc contained in secondary materials such as zinc alkaline solids, or impure solutions in sulphate or chloride media, e.g. smelting slag, galvanizing ashes, alkaline zinc slag, impure zinc oxides or hydroxides, impure zinc electrolytes, leaching effluents, etc. This process discloses a combination of resources which comprise the solvent extraction of the zinc present in the solution resulting from acid leaching with an organic acid solvent. In this process, the acidity produced during the zinc extraction, recovered as an acid solution, is recycled to the leaching stage. This process has several drawbacks: the range of raw materials considered for the feed is exclusively restricted to secondary materials and, despite the presence of purification stages, both for the aqueous stream and the organic stream, the purity of the zinc produced is considered insufficient for some specific end-users and would be worth improving. Furthermore, their is a narrow range of process operative conditions (conditions such as temperature, residence time, acid concentration and zinc concentration).

Another patent (US 4,552,629) discloses a process similar to that disclosed above, although, here, the zinc is produced as a direct electrogalvanizing product instead of as plates deposited from zinc electrowinning. The main object of this hydrometallurgic process to recover zinc from raw materials or secondary materials is to use a combination of stages similar to those of the patent US 4,401,531. The leaching acid is formed by a blend of sulphuric acid and hydrochloric acid. The aqueous solution resulting from the leaching (rich in dissolved zinc) is treated with an organic acid solvent which acts as zinc extraction media. Then, the zinc loaded in the organic solution is treated with an acid solution (stripping), which permits recovering the zinc ions in a new aqueous phase and the regeneration of the organic acid. However, due to the possible use of the zinc produced, and in the absence of suitable organic washing before the zinc stripping, the zinc-rich aqueous solution originating in the stripping does not produce high-purity zinc.

Another hydrometallurgical process (US 4, 572, 771) to specifically recover the zinc contained in the raw material, i.e. raw materials containing zinc, iron and lead, consists of a hydrochloric acid leaching stage. At the end of the leaching stage, the leached aqueous solution (zinc-laden solution clean from leaching residues) undergoes an oxidation stage with recycled chlorine and then undergoes iron and lead precipitation through calcium hydroxide. The zinc-laden aqueous solution (produced after the lead and iron removal) is subsequently treated by an extraction with an organic acid solvent. The organic containing the extracted zinc is treated with water or an acid solution such as, e.g. a HCl solution produced from zinc electrowinning and transforming the organic solvent in a discharged organic to be reused. Nevertheless, in this process, the solvent extraction does not contain a purification stage and, consequently, the organic solvent is not capable of producing high-purity zinc. Furthermore, the raw material feed is very specific. A hydrochloric acid leaching solution and an oxidation with chlorine from electrowinning is also used. Electrowinning is not the conventional process in sulphate media, as they operate with a membrane or separating diaphragm.

On the basis of said documents, it is demonstrated that the different processes referred to cannot produce extremely pure zinc, or zinc compounds, as they are essentially focussed on the raw material and are not sufficiently aimed towards the purification stages.

The first object of the invention is a hydrometallurgical process to produce extremely pure zinc from raw materials containing zinc of both primary and secondary origin, either solid or liquid, and also containing silicon, aluminium, iron, calcium, in variable quantities, in addition to other impurities, e.g. magnesium, manganese, sodium, potassium, copper, nickel, cadmium, antimony, arsenic, cobalt, chlorine, fluoride and any other impurities.

Another object of this process is to permit the production of ultra-pure zinc in metal form by electrowinning or in the form of chemical compounds, e.g. zinc salts through a crystallization process, which permits recovering almost all the zinc contained in the raw material in gentle conditions.

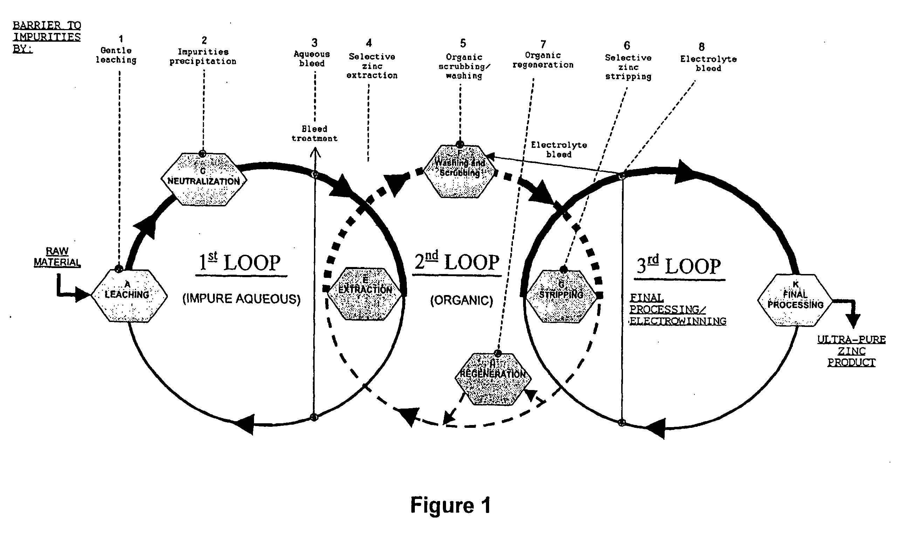

Another object is that it is a process which combines three closed circuits to produce ultra-pure zinc, as is conceptually illustrated in figure 1. The first loop (impure aqueous) combines acid leaching of the raw material, when the considered raw material is a solid, neutralization, followed by extraction of the dissolved zinc using an organic acid solvent, and recycling the acid, which occurs in the aqueous phase during the zinc extraction, to the leaching stage. The second loop is an organic loop, transporting the zinc from extraction to stripping through a washing stage and transporting the acid in the opposite direction. The third loop is the combination of the stripping stages and final product production, which may be the electrowinning stage, using the acid produced in the electrowinning, to strip the organic phase zinc, a process wherein each loop is equipped with its own purification barriers.

Another object of the invention is the purification of the recycled leaching solution, through the complete control of the level of impurities present in said solution.

Another object of the invention is the ultra-purification of the zinc-laden organic produced in the extraction stage, which may be considered as an zinc-laden organic solution completely free from impurities

Another object of the invention is to avoid and/or remove the potential recontamination of the zinc-rich solution produced during the stripping stage and/or in the production of the final product.

### DESCRIPTION OF THE INVENTION

The invention relates to a continuous production process to produce ultra-pure electrolytic metallic zinc or zinc compounds from the zinc contained in raw materials from which it will be extracted using a hydrometallurgic treatment comprising the following stages:
a) If the raw material is solid, this raw material will be leached with an aqueous acid solution to dissolve the zinc.
b) optionally, depending on the nature of the raw material, if the leaching residue has any valuable elements, a solid-liquid separation can be included after leaching.
c) neutralization of the aqueous solution or leaching pulp, or the zinc-containing raw material when this is liquid.
d) solid-liquid separation of the zinc-rich solution (pregnant liquor) from the solids (inert residues and/or precipitates in the neutralizing stage).
e) extraction of the zinc contained in the pregnant liquor by an organic acid solvent,
f) purification of the zinc-laden organic solvent from the extraction step,
g) stripping of the ionic zinc loaded in the organic solvent by an aqueous acid solution.
h) recovery of the zinc contained in the aqueous acid solution produced from stripping by electrowinning and/or crystallization and/or precipitation,
and characterized by the features contained in the characterizing part of claim 1.

Within the first loop- leaching-neutralization-solvent extraction and further leaching, a first barrier to impurities, consisting of gentle leaching; a second barrier consists of alkaline treatment of the raw material pulp and aqueous solution, or of the zinc-rich aqueous solution originating in the leaching; a third barrier consists of the bleeding and treatment of a small aqueous solution stream, collected before and/or after the zinc extraction at step e) by an organic solvent; a fourth barrier consists of the high-selectivity extraction of the dissolved zinc.

Within the second loop, the organic loop, the fifth barrier consists of the zinc-laden organic solvent, through a physical and chemical purification system; a sixth barrier consists of the treatment to clean the zinc-laden organic solvent with an ultra-pure acid solution to strip the zinc from the ultra-pure organic solution; a seventh barrier consists of the partial bleeding and treatment of the stripped organic solvent.

Within the third loop, or final product producing loop, an eighth barrier consists of the bleed of a small stream of the final product producing loop, which will be recycled into the organic loop.

In the given description, the final product production loop is the final, ultimate step of the process through which ultra-pure zinc is produced in metallic form by electrowinning and/or in the form of chemical compounds such as, e.g. zinc salts by crystallization.

### BRIEF DESCRIPTION OF THE DRAWINGS

To complement the preceding description and for the object of helping towards a better understanding of the characteristics of the invention, a set of drawings is attached to these specifications, forming an integral part thereof, and wherein the following has been represented with a merely illustrative, non-limiting character:
Figure 1 shows a conceptual diagram of the ultra-pure zinc metal or zinc compound purification loop process wherein A, C, E, F, G, H, K are the main stages.
Figure 2 shoes a flow chart of the process object of the invention.

### DETAILED DESCRIPTION OF THE INVENTION.

The raw material, considered for the process disclosed in this invention, contains zinc to be extracted, and can come from original raw materials or from secondary resources such as solids or liquids. Solids such as zinc oxide minerals, mineral carbonates, mineral silicates, sulphates, calcines, smelting slag, galvanization residues, dust from arc furnaces, Waelz oxides, chemical precipitates, etc., all of which contain impurities in variable quantities such as silicon, aluminium, iron, calcium, magnesium, manganese, sodium, potassium, copper, antimony, arsenic, cobalt, nickel, cadmium, chlorides, fluorides and other elements and compounds. The zinc contained in these different solid feeds, expressed by weight, can range from 3% to 80%. For liquid raw materials, the zinc ion can be present as sulphate including unlimited, many and varied quantities of chlorides, nitrates, silicates, etc., not necessarily majorities.

The solid raw materials, before being used as feed according to the invention, can be finely ground until reaching the appropriate particle size, with a maximum size of 2 millimetres.

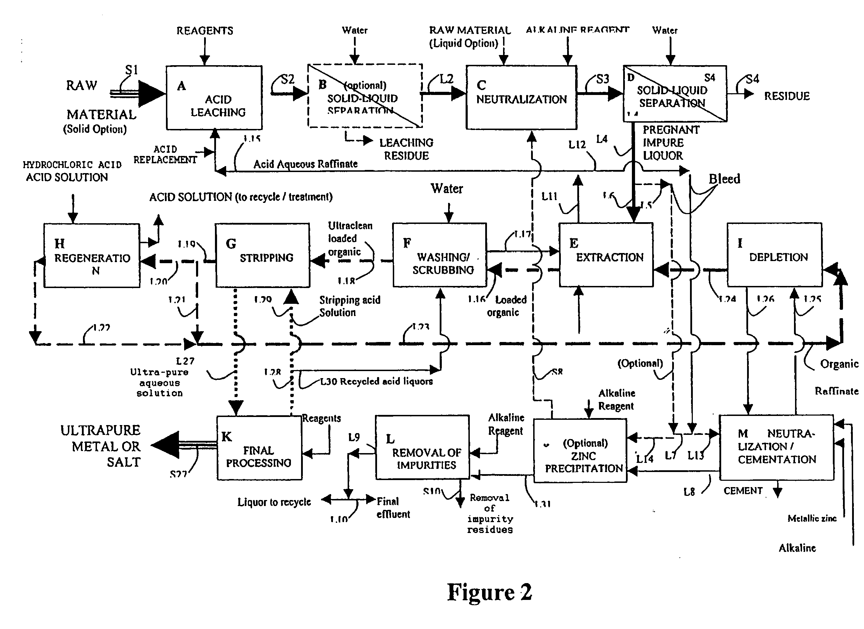

The invention is better understood through a description, schematically represented in a flow chart, which describes the three interrelated loops containing the barriers to the impurities. See figures 1 and 2.

The first loop, (impure aqueous) consists of leaching (at A)- neutralizing (at C)- extracting with solvents (at E) and further leaching (L₁₁, L₁₅ at A), with the bleeding of an aqueous moiety (L₅, L₁₂) and corresponding treatments with these bleeds (at M and/or J).

Different barriers to impurities are used in the first loop.

The first barrier to impurities consists of the treatment (at A) of the solid raw material (if this is the case) by leaching in gentle temperature, acidity and pressure conditions with the aim of limiting the dissolution of the impurities accompanying the zinc, such as iron, aluminium or silicon, which are removed later with the solid after a solid-liquid separation (at D).

According to the process described in this invention, the gentle acid leaching of the solid raw material (S₁), according to step (A), should be carried out in the leaching area (at A) in, at least, one stirred reactor.

The acid solution used to leach the solid raw material can be a recycled solution (L₁₁, L₁₅) from the zinc extraction (at E) corresponding to stage e), which contains at least one strong acid and is complemented with a recovery acid, which can be a blend of acids. The acid or acids that may constitute the aqueous leaching solution are selected from a group formed by sulphuric acid, hydrochloric acid, nitric acid, hydrofluoric acid, or mixtures thereof, in different proportions. In the specific case where the leaching solution contains only one acid, this acid is preferably sulphuric acid.

The aqueous leaching solution (L₁₅) used to leach the zinc contained in the raw material is highly acidic, containing between 0.1 and 5 moles per litre acidity (H⁺) regardless of its origin, including the addition of acid to compensate the alkalinity of the raw material.

The solid raw material leaching stage, with an acid solution, takes place in the leaching area in a pH range between 0 and 3, and, preferably, between 1.5 and approximately 2.5, with a residence time between 0.5 and 7 hours, preferably between 0.5 and 2 hours, and with a temperature below 95°C, preferably between 45°C and 65°C.

Optionally, in stage b) a solid-liquid separation treatment can be carried out, separating the zinc-rich solution from the non-leached solid residue, which could be removed. The solid residue produced could thus be evaluated by undergoing further treatment, and can be separated from the stream at this stage without it undergoing neutralization.

The second barrier consists of an alkaline treatment (at C) of the aqueous raw material or zinc-rich solution originating in the leaching (at A).

For the time being, the zinc loaded in the leaching solution exits the leaching area as pulp, or as a solution if it undergoes the aforementioned solid-liquid separation phase. The leached solution (L₂) as pulp (S₂) or in separate phases, and containing solubilized impurities, undergoes a first purifying treatment consisting of controlled neutralization, step c), where the pH is set at a level compatible with the precipitation of each impurity, constituted by the group formed by silicon, iron, aluminium, antimony and arsenic.

The neutralization agent can be any typical alkaline agent, preferably cheap, such as hydroxides, carbonates, bicarbonates, in particular, calcium carbonates or hydroxides, and, more particularly, chalk or lime.

The neutralization stage is carried out (at C) at a temperature close to that reached in the final leaching step, i.e. at a temperature below 95°C, but generally between 40°C and 60°C. The residence time is of the same order of magnitude as in the leaching section, i.e. between 0.5 and 7 hours but, preferably, between 1 and 4 hours. At the end of the neutralization stage, the pH of the neutralized leached solution is brought to a value between 3 and 5, preferably between 3.5 and 4.3.

Depending on the characteristics of the raw feed and plant capacity, the neutralization treatment can be carried out in several stages in cascade.

When the neutralization is carried out in several steps, the final pH post-neutralization can evolve in a controlled manner until reaching the value set for the different steps in order to selectively precipitate the impurities.

Having concluded the neutralization, a solid-liquid separation takes place (at D), permitting the separation of the neutralized zinc-rich solution (L₄), whilst separating the non-leached solid residue and/or the solid with precipitated impurities (S₄), which is removed.

The neutralized zinc-rich solution (L₄) can be partially or totally sent to the extraction stage (at E), wherein the zinc is extracted using an organic solvent.

The main stream leaving the extraction (zinc-discharged aqueous acid solution or raffinate (L₁₅)) is recycled at the leaching stage.

The third barrier to impurities consists of the bleeding and treatment of a small stream (L₅) produced either from the neutralized zinc-rich aqueous solution (L₄) of this loop, prior to the extraction phase, and/or from the zinc-discharged aqueous acid solution called raffinate (L₁₂), produced after said extraction. Its object is to remove water and prevent the accumulation of different soluble impurities such as sodium, potassium, chlorides, fluorides, magnesium, manganese, copper, nickel, cobalt, cadmium and other impurities, checking the transfer to subsequent steps and thus removing the dissolved impurities. If this stage did not exist, the impurities would accumulate in said solution as a result of the different loop processes used, as has been demonstrated by this invention.

This aqueous solution bleed (L₅) originating at (L₄) or (L₁₂) originating at (L₁₁) is treated in accordance with its characteristics, whilst the majority (L₆) of the neutralized zinc-rich solution (L₄) is sent to the extraction stage (at E).

If the bleed is that of a small stream (L₅) of the neutralized zinc-laden aqueous solution prior to extraction, the bleed (L₅, L₁₄) can be directly sent to the zinc precipitation stage (at J). In another variant of the process, this bleed (L₅, L₇, L₁₃) can be previously treated at a cementation stage (at M) feeding metallic zinc and then the liquid L₈, originating at M, is that which is later sent to that zinc precipitation stage (at J). In every case, this precipitation is followed by a solid-liquid separation where the solid moiety (S₈) containing zinc precipitate is recycled to the neutralization step (at C) in the first loop. The liquid moiety (L₃₁) which exits J undergoes an impurity removal stage (at L) by controlled neutralization stage.

More precisely, in a first variant of the process, the small stream of neutralized zinc-laden aqueous solution undergoes controlled neutralization to precipitate (at J) the zinc from the solution, followed by a solid-liquid separation where the zinc-rich solid moiety (S₈) is recycled to the neutralization stage (at C) of the pulp and/or of the aqueous solution originating from the leaching of the raw material (stage A), whilst the liquid moiety (L₃₁) again undergoes an impurity removal stage (S₁₀) (at L) by controlled neutralization.

In a second variant of the process, the small stream (L₅) of the aqueous solution prior to extraction, can be sent (L₇, L₁₃) to a cementation stage (at M) where it is treated with metallic zinc and where the liquid stream (L₈) produced at that stage (M) is sent to a solid-liquid separation stage (where the zinc-rich solid moiety (S₈) is recycled to the neutralization stage (at C) of the first loop, and the liquid moiety (L₃₇) undergoes an impurity removal step (at L) by controlled neutralization.

In a third variant of the process, the small stream (L_{5,} L₇, L₁₃) of the aqueous solution prior to extraction, can be sent to a cementation stage (at M) where metallic zinc can be introduced, and where the metallic zinc displaces solubilized metal impurities at the leaching stage (at A) whilst the resulting liquid moiety (L₂₅) is sent to the depletion stage (at I) to increase the zinc recovery efficiency of the complete process. Said depletion stage is found within the organic loop. In this depletion stage (I), the organic phase extracts the zinc present in the liquid moiety (L₂₅) contributing to the purification and increasing zinc recovery efficiency, whilst the zinc-depleted aqueous solution (L₂₅) is recycled to the neutralization and/or cementation step (at M). The liquid (L₈) originating at (M) is sent to the zinc precipitation stage (at J) and follows the same treatment as in the second variant of the process.

In a fourth variant of the process, variant one is combined with one of the two previous ones. In this case, a small moiety of the stream (L₁₄) is sent to the zinc precipitation stage (J) followed by a solid-liquid separation, after which the solid with the zinc precipitate (S₈) is recycled to the neutralization stage (C) of the pulp and/or the aqueous solution originating in the leaching of the raw materials, whilst the other moiety (L₇, L₁₃) of that small stream is sent to a cementation stage, at (I) wherein it is treated with metallic zinc and, optionally, to a depletion stage at (E). The aqueous liquid moieties (L₂₅, L₈, L₃₁) resulting from the cementation stage (M) and, optionally, from the depletion stage (I) and of the zinc precipitation stage at (J), are sent to an impurity removal stage at (L) by controlled neutralization.

If the bleed is performed through the separation of a small stream (L₁₂) of the aqueous solution (L₁₁) (acid raffinate) of this loop, the treatment is performed by controlled neutralization of the solution (L₁₂) acidity, through (L₁₃) at (M) and/or through (L₇) and (L₁₄) at (J)), possibly followed by its corresponding solid-liquid separation.

The liquid moiety thus neutralized is treated with cementation (at M) and, optionally, undergoing a depletion (at I) and/or zinc precipitation (at J). Afterwards, the liquid (L₃₁) undergoes final impurity removal (at L), following the same stages (M, I, J, L) described for the case of the bleed (L₅).

All process variants disclosed for the bleed treatment (L₅) can be used for the treatment of (L₁₂) and are described hereunder.

As a first variant of the process, a small part of the aqueous solution stream from the extraction (L₁₂, L₇, L₁₄) undergoes controlled neutralization with the object of precipitating (at J) the zinc in the solution, followed by a solid-liquid separation, from where the zinc-rich solid moiety (S₈) is recycled to the neutralization (at C) of the pulp and/or of the aqueous solution originating in the leaching of the raw material (A), whilst the liquid moiety (L₃₁) undergoes an impurity removal stage (S₁₀) at (L) by controlled neutralization.

As a second variant of the process, the small stream of the post-extraction aqueous solution (L₁₂, L₁₃) can be sent to the neutralization and/or cementation stage (at M) where it is treated with metallic zinc and from where the liquid stream (L₈) produced at that stage (M) is sent to the zinc precipitation stage (J) to subsequently be sent to a solid-liquid separation stage where the zinc-rich solid moiety (S₈) is recycled to the neutralization step (at C) of the first loop, and the liquid moiety (L₃₁) undergoes an impurity removal stage (at L) by controlled neutralization.

In the third variant of the process, the small stream (L₁₂, L₁₃) of the post-extraction aqueous solution, can be sent to the neutralization-cementation stage (M) where it will be treated will alkali and metallic zinc and the resulting liquid (L₂₅) is sent to the depletion stage (at I) to increase the zinc yield from the total process. Said depletion stage is located in the organic loop. The liquid (L₈) originating at (M) is sent to a zinc precipitation stage (at J), and follows the same treatment as described in the previous variant (second).

In a fourth variant of the process, it is possible to combine variant one with either of the two previous ones. In any case, a moiety of the small stream (L₇, L₁₄) is sent to the zinc precipitation stage (J) followed by a solid-liquid separation after which, the solid containing the zinc precipitate (S₈) is recycled to the neutralization stage (at C) of the pulp and/or of the aqueous solution originating in the leaching of the raw material. The other moiety L₁₃ of that small stream, is sent to the neutralization stage in (M) where it is treated with alkali and metallic zinc and, optionally, the liquid is sent to the depletion stage (at I). The aqueous liquid moieties (L₂₆, L₈, and L₃₁) resulting from the cementation stage at (M) and, optionally, from the depletion stage at (I) and from the zinc precipitation at (J), are sent to an impurity removal step at (L) by controlled neutralization.

As already mentioned, the depletion stage (at I) can be optionally used, taking place at the intervention of both loops. It consists of zinc extraction from the aqueous solution (L₂₅) fed to the organic loop, by treating it with a zinc-discharged, organic solvent (L₂₃) to deplete, as far as possible, the zinc contained in this aqueous solution, before its final treatment and removal, increasing the zinc recovery which is incorporated, in this manner, to the organic loop.

The two streams L₅ and L₁₂ can be treated individually or in combination.

The bleed treatment conditions (L₅ and/or L₁₂) are the following: whilst this bleed is treated (at M) by controlled neutralization with an alkaline agent, the pH is maintained between 2.0 and 4.0 and it is treated at that pH by cementation with metallic zinc powder to trigger the precipitation of the metal impurities such as copper, cadmium, cobalt, nickel and other impurities. The temperature is between 20°C and 90°C. However, as previously mentioned, this bleed (L₅ and/or L₁₂) fulfils another object which is removing, with L₈ and/or L₃₁, L₉, soluble elements from the main, aqueous, solution circuit such as magnesium, sodium, potassium, as well as fluorides and chlorides, and also to attain water balance.

The soluble zinc present in this bleed (L₅ and/or L₁₂) and the added zinc (metallic) used in the cementation can be precipitated (at J) by an alkaline agent from pH 6.0 to pH 8.0 at a temperature between 70 and 90°C and, after its solid-liquid separation, the resulting pulp is recycled to the neutralization stage (at C). Another possibility can be to recover this zinc at the depletion stage (at I) of the organic circuit as has been previously described.

In both cases, through the depletion stages (at I) and/or recycling the pulp (at J), the total zinc recovered is increased.

The cement (the solid material containing the precipitate of metal elements of M) is removed from the process or undergoes its own elimination treatment.

After this zinc recovery, the aqueous solutions (L₂₆, L₈ and/or L₃₁) exit the neutralization and /or cementation /depletion areas (at M and /or I) and/or zinc precipitation (at J) still containing dissolved impurities, where they should be sent to an impurity removal area (at L), where they are treated with an alkaline agent at a pH between 8.0 and 12.0 and, subsequently, the solid precipitate is separated from impurities (S₁₀) at a temperature between 30 and 90°C. Most of the liquid produced in this final stage of the bleed treatment should be recycled to the main circuit of the process as a base for the preparation of reagents or as process water. The remaining liquid is evacuated as final effluent (L₁₀).

The part of the solutions (neutralized zinc-rich solution (L₅) and/or zinc-discharged aqueous acid solution (L₁₂)) which are separated from the main stream (bleeds) to control the growth level of the dissolved impurities, increase zinc recovery and adjust the water and/or alkaline element balance, represents a maximum of 25% of the volume of the total stream and, preferably, between 8 and 15% in volume.

The fourth barrier consists of extraction with a high-selectivity organic acid solvent (at E) of the dissolved zinc, stage e). This selectivity is increased enormously as a result of the acid conditions during the zinc extraction and due to the operation conditions.

This barrier is produced at the interface between two loops: the leaching-neutralizing-extraction loop, and the organic loop.

The second loop, called "organic" loop is a solvent extraction system which has the advantages of the aqueous phase characteristics and its immiscibility with the aqueous phase. This second loop combines the zinc extraction stages (at E), the purification of the zinc-laden organic solvent, (L₁₆), (at F), the L₁₈ zinc stripping (at G), the total (L₁₉) or partial (L₁₉) regeneration of the organic acid solvent (at H) and, optionally, of the depletion (at I).

The majority or entire stream, (L₆) of the neutralized zinc-rich solution (pregnant liquor) at stage d) comes into contact at stage e) with an organic acid (L₂₄) whose mission is to permit zinc extraction. The solution undergoes the ionic chemical equilibrium reaction described below:

Zn²⁺ + 2HR ↔ ZnR₂ + 2H⁺ (1)

In this chemical reaction, HR represents said extraction organic acid reagent solution, and ZnR₂ represents the zinc-laden organic solution.

This pregnant liquor, fed at the extraction stage, has a pH over 2 and, preferably, between 3.5 and 4.3. During the zinc extraction, stage e), the aqueous solution increases its acidity to between 0.01 and 3.0 g/l of equivalent H⁺. This occurs because the protons are transferred from the organic phase to the aqueous phase throughout, preferably, 3 or 4 extraction steps at this stage, following the reaction (1). An alkaline agent can be added (as in other processes) to slightly increase the pH.

The zinc extraction temperature ranges from room temperature to 80°C and, preferably, 40°C.

To attain the best selective extraction, acid conditions are used (without adding an alkaline agent) so that, in this way, only those cations with greater affinity for the organic solution, such as ferric and zinc, can be extracted. In these acid conditions, there is an increase in selectivity against other cation impurities. The aqueous solution that exits the extraction area (L₁₁- L₁₅) (acid raffinate), has acidity equivalent to that of the extracted zinc. This acidity (L₁₁- L₁₅) is used in the leaching stage (at A), thus reducing the necessary acid addition.

The organic acid, HR, is normally selected from the group formed by the acids: alkyl phosphoric acids, alkyl phosphonic acids, alkyl phosphinic acids, which have the capacity to extract zinc and, preferably within the group constituted by di-(2-ethylhexyl) phosphoric acid (D₂EPHA), di-(2-ethylhexyl phosphonic acid and di-(2,4,4-trimethylpentyl)phosphinic acid.

For its use in zinc extraction, HR is dissolved in a mixture of organic compounds originating from an oil moiety, e.g. kerosene. The concentration of this organic agent in kerosene is between 5% and 75% and, preferably, between 30% and 50%.

During stage e), wherein the neutralized zinc-rich aqueous solution (L₁₅) comes into contact at (E) with the extraction solvent (L₂₄), in what is known as counter-current conditions, zinc extraction is achieved, releasing H⁺ ions (two H⁺ ions per each retained Zn²⁺ ion). The aqueous acid solution produced (L₁₁) at the extraction stage (at E), still containing residual zinc and a significant quantity of dissolved impurities can be, totally or partially, but always mostly, recycled at stage a) as a leaching solution to leach the solid raw material.

The ratio between quantities in the organic phase and aqueous phase at the extraction stage (at E) (O/A ratio) is selected according to the process conditions to successfully reach correct physical and chemical behaviour, generally positioned between 0.1 and 10 and, preferably, between 1.0 and 3.0.

The zinc-laden organic solution (L₁₆) (ZnR₂) exits the extraction stage e) at (E), containing co-extracted, entrained impurities in small quantities, is sent to stage f) for its ultra-purification (at F).

These remaining impurities together with zinc in the organic phase should be completely removed (at F), to avoid the contamination of the product resulting from the process according to the invention, which must be extremely pure. This is the reason for which the laden organic solution undergoes a treatment that can be described as an ultra-purification stage, step f) at (F) to remove all traces of remaining impurities still present. This is the object of the following barrier (the fifth) to impurities.

Within the second organic loop of the fifth barrier to impurities, consisting of the treatment of the zinc-laden organic solution (L₁₆), produced at the extraction stage e), at (E). This treatment, stage f) at (F), has a double purification system: scrubbing and washing using an aqueous acid solution (L₃₀ and water) to remove both impurities entrained by the aqueous phase in the organic phase, and other impurities that, like calcium, are co-extracted with the zinc by the organic phase.

This barrier to impurities consists of a combination of successive physical and/or chemical treatments of the zinc-laden organic solvent, used at stage f). Herein, the impurities which, at concentration levels of ppm or ppb, can be co-extracted or entrained in the zinc-laden organic solvent that exits the extraction step, are removed.

This purification treatment (scrubbing/ washing) (at F) can be formed by an array of counter-current stages. The number "q" of successive physical areas and/or "r" chemical areas, is in relation to the characteristics of the raw material, ("r" + "q" should be at least equal to one):
Number "q" of each physical purification treatment area (scrubbing) is at least 1 and, preferably between 1 and 4.
Number "r" of each chemical purification treatment area(washing) is at least 1 and, preferably, between 1 and 4.

The physical treatment of the organic phase, required to avoid aqueous entrainment in the organic phase, is achieved by adding acidulated water, with an acidity range between 0.01 and 4.0 g/l of equivalent H⁺, and in relation to organic/aqueous streams between 5 and 100 and, preferably, between 15 and 25.

The chemical treatment is carried out using an acidified recycled solution (mainly containing dissolved zinc) (L₂₈, L₃₀ and water). This solution has between 10 g/l and 100 g/l of zinc and between 0.1 and 5 g/l of equivalent H⁺.

This treatment is based on the displacement of the co-extracted impurities (Meⁿ⁺) to the aqueous phase in the organic phase (MeR₂) by additional zinc extraction, achieving an organic solution of pure zinc according to the equilibrium reaction:

MeR₂ + Zn²⁺ ↔ ZnR₂ +Me²⁺ (2)

(Me has the valance of the metallic impurity. In this case, and as an example, a divalent ion has been considered).

Thanks to the use of a combination of different stages and to the selection of special process conditions, the zinc loaded in the organic solvent (L₁₈), ZnR₂, reaches extremely high purity levels.

The sixth barrier to impurities, still within the second "organic" loop, consists of the treatment (at G) of the clean, zinc-laden organic solution (L₁₈), according to stage g) at (G), with a new aqueous acid solution (L₂₈, L₂₉), (this solution should itself be extremely pure), in special conditions according to the following chemical equilibrium reaction (3).

ZnR₂ + 2H⁺ ↔ 2HR + Zn²⁺ (3)

The stripping conditions (at G) should be so that impurities such as iron and aluminium, extracted together with the iron, are not stripped from the organic phase.

The acidity of the ultra-pure zinc acid solution used in the zinc stripping is between 0.5 and 5.0 g/l of equivalent H⁺, and contains between 0 g/l and 250 g/l of zinc.

The temperature of this stage is between 20°C and 60°C and, preferably, between 35°C and 40°C.

The seventh barrier to impurities within the second organic loop is the regeneration step (at H).

Only very special cations, more specifically Fe³⁺ or Al³⁺, are also extracted by the organic solution (at E/I) together with the zinc cations, but these cations are not as easily stripped as the zinc cations (at G), remaining in the organic solvent and, therefore, they do not contaminate the aqueous solution. To prevent their accumulation, a bleed of the organic stream, originating at stage g) is sent to the regeneration stage (at H). The bleed that is sent to regeneration represents, at most 20% of the total volume of the stream and, preferably, between 1% and 5% in volume.

In this regeneration stage (H), the small organic stream (L₂₀) is treated with hydrochloric acid solution with acidity between 2 and 10 mol/l, preferably between 4 and 8 mol/L, to strip those ions and regenerate the organic solution maintaining suitable quality and purity levels in the organic solution. This organic bleed, already regenerated, is recycled to the main organic circuit and the depleted hydrochloric acid can be sent to leaching or to a hydrochloric acid recovery system.

The organic acid solvent (L₁₉) from which the zinc has been removed, is totally or partially recycled (L₂₁) at the depletion stage at (I) and at the extraction stage e) at (E), except for a small stream (L₂₀).

The organic stream (L₂₃) containing the mixture of the organic moiety thus treated at regeneration (L₂₂) and the stripped organic solution (L₂₁) is sent to the depletion and extraction stages (at I/E).

In another variant of the process, the entire stream L₁₉ is made to pas through regeneration at (H) before being recycled to depletion/ extraction (at I/E).

The final aqueous solutions of the solvent extraction system: acid raffinate from extraction, acid solution from stripping, and depleted hydrochloric acid from regeneration are passed through an active charcoal column to remove the organic content entrained by these streams, thus minimizing organic losses.

This treatment is another additional purification barrier, preventing the organic contamination of all aqueous solutions in general, and the ultra-pure stripped aqueous acid solution in particular.

Within the third loop, the final product producing loop, which is generally an electrowinning loop, is combined with stripping (at G) and the final product production stage (at K), the eighth barrier to impurities consisting of the bleeding of a small stream (L₃₀) of the aqueous of this loop. This bleed is sent to the scrubbing/ washing stage (at F), to maintain the excellent quality of that aqueous stream acting as a purification system.

In this way, it permits the supply of an ultra-pure aqueous acid solution (completely free from impurities) L₂₇), to the scrubbing/ washing stage which is used to produce a final product of ultra-pure zinc.

This bleed is an ultra-pure aqueous acid solution containing between 0.5 g/L and 5 g/L of equivalent protons and between 0 g/L and 250 g/l of zinc.

The ultra-pure aqueous acid solution bleed (L₃₀) is sent to the scrubbing/ washing stage, which further contributes to assuring the extremely low impurity level required, itself acting as a medium for the extreme purification of the zinc-laden organic solvent. With this other barrier, the total purity in the aqueous stripping loop is maintained, and it is a tool to prevent external contamination at the stages of final product production.

The ultra-pure zinc-rich solution is now a practically pure aqueous solution. It is fed to the last stage of the process according to the invention. The ultra-pure zinc is recovered according to one of the following processes: electrowinning and/or crystallization and/or precipitation and/or any other known process to produce zinc compounds. In the case of electrowinning, the zinc purity will be higher than 99.995%, producing the best quality classification of the London Metal Exchange and following the maximum quality standards (ISO-752 Special High Grade (SHG), B6-98 5^{a} of ASTM, UNE 37-301-88, Zn 1 of BSL). Equivalent purity definitions will be applicable to other products or salts.

### EXAMPLE

The invention will be better understood through a description of the process according to the invention, schematically represented in the flow chart wherein the stages of the process have been represented by capital letters from (A) to (M). See figure 2.

This example relates to the in-plant recovery of high-purity metallic zinc, by:
- leaching the zinc contained in the raw material, achieved by the use of an aqueous solution of a blend of acids, a blend which contains sulphuric acid (representing 95% by weight equivalent of H⁺ in the blend)
- Extraction of the dissolved zinc using an organic acid solvent (D₂EPHA),
- Stripping the zinc using an acid treatment of the zinc loaded in the organic solvent.

The solid raw material used as feed (S₁) contains 10% by weight of zinc. The main impurities accompanying the zinc are: silicon (25% by weight), iron (2% by weight), calcium (2% by weight) and other impurities (magnesium, manganese, potassium, copper, cobalt, nickel, cadmium, chlorides, fluorides) which, with the sulphate and others, representing the balance of 100% by weight.

The raw material (100 t/h) is ground until 100% is under 1.29 millimetres, a K₈₀ below than 500 microns, and, prepared in pulp form, is fed at leaching point (A). This stage contains 4 leaching areas in cascade. The raw material is introduced at the same time as the recycled leaching aqueous acid liquid/raffinate (L₁₅) which is suitably acidified by the addition of a concentrated acid which compensates for the raw material alkalinity.

The average leaching pH is maintained throughout the attack at a value below 1.4.

The average attack temperature is set at a constant value of approximately 55°C, and the time necessary for the raw material to reach the final leaching reactor is 2 hours.

The pulp (S₂) which exits the leaching stage (A) is, in this case, directly fed (without solid-liquid separation (B)) to the neutralization (C).

The zinc-laden aqueous solution (L₂) of the leached pulp (S₂) is neutralized in 4 neutralization reactors (C), simultaneously adding chalk, so that the average pH (at S₃), on concluding the neutralization, is set at a value of 4.2. The temperature is kept around 53°C between the first and fourth neutralization reactor.

After the solid-liquid separation and the washing of the cake at (D), the residue (S₄) is removed whilst the zinc-rich solution (L₄) is sent, in this case the whole stream (L₆), to the extraction stage (E).

The solution (L₆), which constitutes the solution for the zinc extraction, is treated in several extraction stages (E) with an inorganic solvent (L₂₄) (a D₂EHPA solution), by ion exchange according to the aforementioned equation (1). Each extraction stage comprises intimate contact between two immiscible phases, facilitating the zinc extraction between each aqueous solution and each extraction organic solvent, and a separation area for the two liquids post-extraction.

During this zinc extraction by the organic acid solvent (organic raffinate) L₂₄, the aqueous phase is acidified in accordance with the reaction (1) and the aqueous solution produced, acid aqueous raffinate (L₁₁) is, in this case separated by two flows (L₁₅) and (L₁₂). The majority stream (L₁₅) is sent to leaching (A), and the minority or bleed (L₁₂) is passed (L₁₃) through a bleed treatment to remove impurities, consisting of neutralization and cementation (M).

The zinc-laden organic solvent (L₁₆) is sent to the extreme purification stage (F), which comprises two successive purification areas. One is a physical purification stage to remove aqueous solution impurities entrained by the organic stream, and the other, of chemical purification, wherein, in the appropriate conditions according to reaction (2), remove impurities co-extracted together with zinc. The purification (scrubbing/ washing) is achieved, in suitable conditions, by a small flow, bleed from the recycled, ultra-pure aqueous acid solution (L₃₀) of the final product production loop- still containing zinc - and water. After this step, an ultra-pure zinc-laden organic solvent is produced, which is sent to stripping (G) in stream form (L₁₈), whilst (L₁₇) constituted by an aqueous acid solution, containing the impurities, is recycled to the extraction stage (E). The zinc-laden organic solution (L₁₈) which is produced by purification (F) is very pure and practically free from impurity residues. After stage (G), this is sent for zinc stripping and the release of the aforementioned extraction organic solvent according to the above reaction (3). This step produces a recycled aqueous acid solution (L₂₉) which contains 3.4 g/l of free equivalent H⁺ and 50 g (l of zinc (zinc-depleted electrolyte).

The stripped organic stream (L₁₉) is divided in two flows, a small one (L₂₀) and a major one (L₂₁).

The small flow (L₂₀) of stripped organic solution, 2% of the total, is sent to the regeneration stage (H) where the iron and aluminium co-extracted in the organic stream (and not previously stripped) are now removed from said organic stream using a hydrochloric acid solution.

The entire organic acid solvent stream (organic raffinate) (L₂₃) exits the stripping and regeneration and is recycled to the extraction stage, passing through a depletion stage (I). This depletion stage is another extraction stage, wherein the zinc contained in the bleed (L₁₂) and the zinc dissolved in the cementation is recovered, all of which are present in the stream (L₂₅) coming from the neutralization and cementation stages (M). The last remaining impurities, present in the aqueous solution (L₂₆) are recycled to the neutralization and/or cementation at (M) and finally removed together with the hydroxide pulp produced in that neutralization (M) . In this case, as with L₈/L₃₁, it is directly sent (without passing through the zinc precipitation stage (J)) to the final impurity removal stage (L). The pH is increased in this stage to precipitate the alkaline impurities which are removed at S₁₀. An aqueous liquor is also formed L₉ which is partially recycled to process L₁₀.

The aqueous solution (L₂₇) originating in the stripping stage (G) constitutes the ultra-pure zinc solution from which the ultra-pure metallic zinc can be produced (S₂₇), by zinc electrowinning.

In addition to the metallic zinc product of this final process (K), a depleted, ultra-pure zinc acid solution (L₂₉) is produced which is recycled to the stripping stage (G) thus reloading with more zinc. Stages (G) and (K) form the ultra-pure aqueous circuit. Only a small bleed from the ultra-pure aqueous acid solution (L₃₀) is sent to purification (scrubbing/ washing) (F) to maintain the extreme purity of the solution throughout this loop.

All the impurities initially present in the raw material such as silicon, aluminium, iron, calcium, magnesium, potassium, copper, cobalt, nickel, and others, are removed at the different process stages in accordance with the invention. The recovered zinc has a minimum purity of 99.995% by weight.

The numerical data of the different process stages in accordance with the invention are summarized in the following table and are shown in accordance with the attached flow chart (See figure 2).

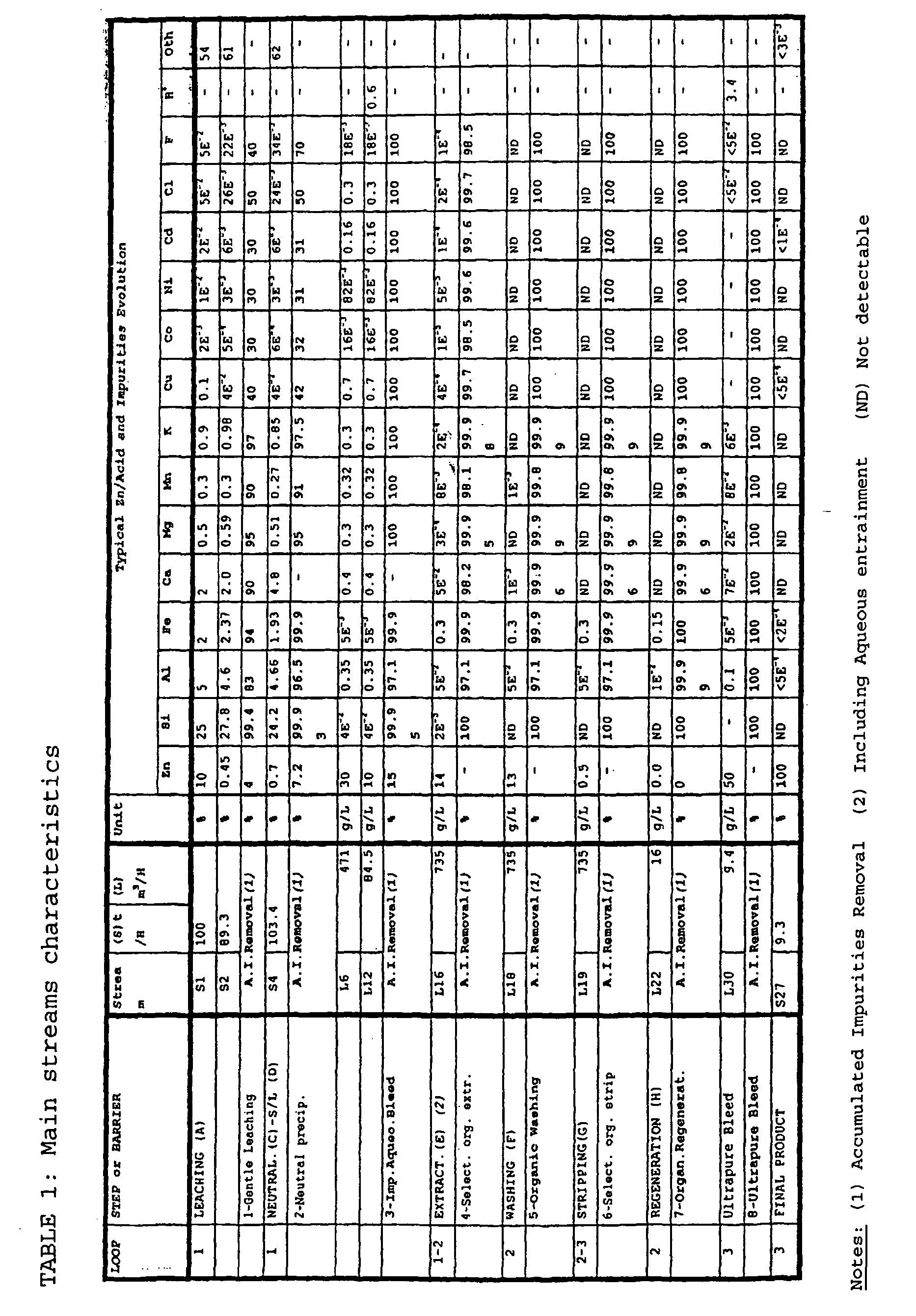

## Claims

1. A process for the continuous production of ultra-high purity electrolytic zinc or ultra-high purity zinc compounds from raw materials containing zinc which can be extracted by a hydrometallurgic treatment comprising the following stages:
a) if the raw material is solid, this raw material will be leached with an aqueous acid solution to dissolve the zinc.
b) optionally, depending on the nature of the raw material, if the leaching residue has any valuable elements, a solid-liquid separation can be included after leaching.
c) neutralization of the aqueous solution or leaching pulp, or of a zinc-laden solution when the zinc containing raw material is liquid.
d) solid-liquid separation of the zinc-rich solution (pregnant solution) from the solids (inert residues and/or precipitates in the neutralizing stage).
e) extraction of the zinc contained in the pregnant solution by an organic acid solvent,
f) purification of the zinc-laden organic solvent from the extraction stage,
g) stripping of the ionic zinc loaded in the organic solvent by an aqueous acid solution.
h) recovery of the zinc contained in the aqueous acid solution produced from stripping by electrowinning and/or crystallization and/or precipitation,
organized in three interrelated loops, each containing successive combined barriers to impurities.
- within the first loop- leaching-neutralization-solvent extraction and further leaching, the first barrier to impurities, consisting of leaching in gentle conditions; a second barrier consists of the alkaline treatment of the raw material pulp and aqueous solution or of the zinc-rich aqueous solution originating in the leaching; a third barrier consists of the bleeding and treatment of a small aqueous solution stream, collected before and/or after the zinc extraction in step e) by an organic solvent;
- within the second loop, the organic loop, the fourth barrier consists of the highly-selective zinc extraction of the aqueous solution with said organic solvent; the fifth barrier consists of the treatment of the zinc-laden organic solvent, through a physical and chemical purification system; a sixth barrier consists of the treatment to clean the zinc-laden organic solvent with an ultra-pure acid solution to strip the zinc from the ultra-pure organic solution; a seventh barrier consists of the partial bleeding and treatment of the stripped organic solvent,
- within the third loop, the eighth barrier consists of the bleed of a small stream of the final product producing loop, which will be recycled into the organic loop,
**characterized in that**:
- the third barrier to impurities consists of the bleed of a small stream of neutralized zinc-laden aqueous solution and /or the zinc-discharged, aqueous solution originating in the zinc extraction that undergoes neutralization and/or cementation stages by controlled neutralization of the acidity and subsequent zinc precipitation from the resulting aqueous solution and followed by a solid-liquid separation, from where the solid moiety of zinc precipitate is recycled to the neutralization stage at c) of the pulp and/or of the solution originating in the raw material leaching, and the liquid moiety undergoes an impurity removal stage by controlled neutralization and is sent to a depletion stage within the organic loop, where the zinc present in the aqueous stream is extracted in a depletion stage by the organic phase, whilst the zinc depleted aqueous solution originating in the depletion stage is recycled to neutralization and/or cementation,
- the eighth barrier to impurities is the bleed from a small stream of ultra-pure aqueous acid solution, which is sent to the scrubbing/ washing stage, to purify the zinc-laden organic solution and contains between 0.5 and 5 g/L of equivalent H⁺ and between 0 and 250 g/L of zinc.

2. A process according to claim 1, **characterized in that** the raw material from which the zinc will be extracted is solid, either from primary or secondary materials, and contains between 3 and 80% by weight of zinc, which can be in the chemical form of oxides and/or salts and/or metal.

3. A process according to claim 1, **characterized in that** the raw materials are impure zinc aqueous solutions, with other cations and anions in variable quantities.

4. A process according to claims 1 and 2, **characterized in that**, within the first loop, the first barrier to impurities consists of leaching in gentle conditions of the raw material, conditions relating to temperature, acidity and residence time, to limit the solubilization of impurities, maintaining them in the solid raw materials.

5. A process according to at least one of claims 1, 2 and 4, **characterized in that** the leaching conditions, are maintained at a pH between 0 and 3.0 and, preferably, between 1.5 and 2.5.

6. A process according to at least one of claims 1, 2 and 4, **characterized in that** the leaching is carried out at a maximum temperature equal to 95°C, preferably, between 45°C and 65°C.

7. A process according to at least one of claims 1, 2 and 4, **characterized in that** the leaching is carried out with a residence time of 0.5 to 7 hours and, preferably, with a residence time between 0.5 and 2 hours.

8. A process according to at least one of claims 1 to 7, **characterized in that**, within the first loop, the second barrier to impurities consists of the precipitation of several impurities, co-leached with the zinc and/or present in aqueous solution, by neutralizing an aqueous solution at a controlled pH between 3 and 5, and, preferably, between 3.5 and 4.3 to selectively precipitate each impurity, in particular, silicon, iron, aluminium and antimony, removing them from the solution.

9. A process according to claim 8, **characterized in that** the operating temperature of the neutralization stage is 95°C maximum and, preferably between 40°C and 60°C.

10. A process according to claim 8, **characterized in that** the neutralization is carried out with a residence time of between 0.5 and 7 hours, preferably between 1 and 4 hours.

11. A process according to claim 1, **characterized in that** a small stream of the zinc-laden aqueous solution originating at the zinc extraction stage c) and/or zinc-discharged aqueous acid solution originating at the zinc extraction stage e) undergoes controlled neutralization followed by zinc precipitation and a subsequent solid-liquid separation, from where the solid zinc precipitate moiety is recycled to the neutralization stage c) of the pulp and/or solution originating in the raw material leaching, and the liquid moiety undergoes an impurity removal stage by controlled neutralization.

12. A process, according to claim 1, **characterized in that** the small stream of the neutralized zinc-laden aqueous solution originating at stage c), undergoes a cementation stage by introducing metallic zinc and removing the solid with the metallic impurities, followed by zinc precipitation of the resulting aqueous solution and a subsequent solid-liquid separation, from where the solid zinc precipitate moiety is recycled to the neutralization stage at c) of the pulp and/or solution originating from the raw material leaching, and the liquid moiety undergoes a impurity removal stage by controlled neutralization.

13. A process according to claim 11, **characterized in that**:
- a moiety of the small stream of the neutralized zinc-laden aqueous solution and/or the zinc-discharged aqueous acid solution originating in the extraction, is/are sent to the zinc precipitation stage, followed by a solid-liquid separation after which, the zinc precipitate is recycled to the neutralization stage c) of the pulp and/or of the leached solution originating in the raw material leaching stage.
- the other moiety of the small stream is sent to the neutralization and/or cementation stage and, in the case that the small stream comes from the zinc-discharged, aqueous acid solution, after neutralization, it is optionally sent to the depletion stage,
- and the liquid fractions, resulting from the zinc precipitation and/or neutralization and/or cementation and/or depletion are sent to the impurity removal stage by controlled neutralization.

14. A process according to claim 12, **characterized in that** the pH of the controlled neutralization treatment of the acidity with an alkaline/cementation agent with metallic zinc, is between 2.0 and 4.0.

15. A process according to any of claims 11 to 13, **characterized in that** the zinc in solution in the small stream in the neutralized zinc-laden aqueous solution and/or the zinc-discharged, aqueous acid solution originating in the zinc extraction, is precipitated with an alkaline agent at a pH between 6.0 and 8.0.

16. A process according to either of claims 14 and 15, **characterized in that** the temperature of the neutralization, cementation and zinc precipitation treatments is between 70°C and 90°C.

17. A process according to any of claims 1 to 9, **characterized in that** the aqueous solution containing impurities, originating, by the bleed treatment, in neutralization, cementation, depletion and/or zinc precipitation, is treated with an alkaline agent, at a pH between 8.0 and 12.0 to precipitate the impurities which are removed, whilst the liquid obtained after the separation of impurities is recycled to the process.

18. A process according to any of claims 11 to 17, **characterized in that** the moieties of neutralized zinc-rich liquid and or zinc-discharged aqueous acid solution, originating at the extraction stage e), represents, at most, 25% of the volume of the total stream and, preferably, between 8% and 15% in volume.

19. A process according to any of claims 1 to 18, **characterized in that**, within the first loop and second loop, the fourth barrier to impurities consists of the highly-selective extraction of dissolved zinc, by an organic acid solvent, stage e) feeding the aqueous zinc solution neutralized to a pH between 2.0 and 5.0 and, preferably, between 3.5 and 4.3.

20. A process according to any of claims 1 to 19, **characterized in that** the extraction of the zinc contained in the neutralized zinc-rich aqueous solution, takes place in an acidity range between 0.01 and 3.0 g/l of equivalent H⁺ and at a temperature between room temperature and 80°C, preferably 40°C.

21. A process according to any of claims 1 to 20, **characterized in that** the extraction of the zinc contained in the neutralized zinc-rich aqueous solution, is performed using an organic acid solvent, dissolved in kerosene, chosen from the group constituted by alkyl phosphoric acids, alkyl phosphonic acids, alkyl phosphinic acids and, preferably within the group constituted by di-(2-ethylhexyl) phosphoric acid (D₂EPHA), di-(2-ethylhexyl) phosphonic acid and di-(2,4,4-trimethylpentyl)phosphinic acid.

22. A process according to claims 19 and 21, **characterized in that** the ratio of phases between the organic solvent and the aqueous solution (ratio written as O/A) is between 0.1 and 10 and, preferably, between 1.0 and 3.0.

23. A process according to any of claims 1 to 22, **characterized in that** the fifth barrier to impurities consists of the treatment of the zinc-laden organic solvent from the extraction, with a double purification system, physical and chemical treatment (scrubbing/washing), used in the aqueous acid solution to remove impurities from the aqueous phase entrained in the organic phases, and other impurities co-extracted with the zinc.

24. A process according to claim 23, **characterized in that** the physical treatment consists of washing the organic solvent with zinc from the extraction, with acidulated water containing between 0.01 and 4.0 g/L of equivalent H⁺, with an organic/aqueous ratio between 5 and 100 and, preferably, between 15 and 25.

25. A process according to claim 23, **characterized in that** the chemical treatment is carried out with a recycled acidulated solution containing between 0.1 and 5 g /L of equivalent H⁺.

26. A process according to any of claims 23 to 25, **characterized in that** the physical and chemical purification is carried out counter-current, in successive area(s) which are "q" physical and/or "r" chemical, so that "r"+ "q" should be at least equal to one, number "q" for areas of physical purification treatment (scrubbing) should be preferably between 1 and 4 and number "r" for chemical purification treatment areas (washing) should, preferably between 1 and 4.

27. A process according to any of claims 1 to 26, **characterized in that** the sixth barrier to impurities, still within the second loop, consists of the treatment of the loaded organic solvent, in the stripping stage, with an aqueous acid solution wherein the acidity is between 0.5 and 5 g/L or equivalent H⁺.

28. A process according to claim 27, **characterized in that** the aqueous acid solution used in stripping contains a maximum of 250 g/l of dissolved zinc.

29. A process according to any of claims 26 to 28, **characterized in that** the treatment temperature is between 20°C and 60°C and, preferably, between 35°C and 40°C.

30. A process according to any of claims 1 to 29, **characterized in that**, within this second loop, the seventh barrier to impurities is that sent from a small bleed stream of the stripped organic phase to the regeneration phase, treating this organic solution with a hydrochloric acid solution, and subsequently recycling this treated organic bleed to the circuit.

31. A process according to claim 30, **characterized in that** the hydrochloric acid solution has an acidity between 2 and 10 mol/L and, preferably, between 4 and 8 mol/L.

32. A process according to claims 28 and 31, **characterized in that** the organic bleed sent to regeneration represents, at most, 20% of the volume of the total stream and, preferably, between 1% and 5% in volume.

## Patentansprüche

1. Ein Verfahren zur kontinuierlichen Herstellung von ultrahochreinem elektrolytischem Zink oder ultrahochreinen Zinkverbindungen aus Rohmaterialien, die Zink enthalten, die durch eine hydrometallurgische Behandlung gewonnen werden können, die die folgenden Schritte umfasst:
a) wenn es sich um ein festes Rohmaterial handelt, wird dieses Rohmaterial mit einer wässrigen Säurelösung abgelaugt, um das Zink zu lösen.
b) optional und abhängig von der Beschaffenheit des Rohmaterials, wenn die Reste der Ablaugung irgendwelche verwertbaren Elemente aufweist, kann nach dem Ablaugen eine Trennung von Festem und Flüssigem erfolgen.
c) Neutralisierung der wässrigen Lösung oder der Ablaugungsreste oder einer zinkhaltigen Lösung, wenn das in dem Rohmaterial enthaltene Zink flüssig ist.
d) Trennung von Festem und Flüssigen der Zink reichen Lösung (tragende Lösung) von den Feststoffen (inerte Reststoffe und/oder Ausfällungen in der Neutralisierungsphase).
e) Entnahme des Zinks in der tragenden Lösung durch ein organisches saures Lösungsmittel.
f) Reinigung der zinkhaltigen organischen Lösung aus der Entnahmephase.
g) Strippen des ionischen Zinks in der organischen Lösung durch eine wässrige saure Lösung.
h) Rückgewinnung des Zinks, der in der wässrigen sauren Lösung enthalten ist, die durch das Strippen erhalten wurde, durch Metallgewinnung und/oder Kristallisierung und/oder Ausfällung,
angeoordnet in drei miteinander verbundenen Kreisläufen, von denen jeder aufeinanderfolgende, kombinierte Barrieren für die Unreinheiten aufweist.
- innerhalb des ersten Kreislaufs - Ablaugung - Neutralisierung - Entnahme der Lösung und weiteres Ablaugen, wobei die erste Barriere für Unreinheiten aus Ablaugen unter schonenden Bedingungen stattfindet; eine zweite Barriere besteht aus der alkalischen Behandlung der Reste des Rohmaterials und einer wässrigen Lösung oder aus einer zinkreichen wässrigen Lösung, die aus dem Ablaugen stammt; eine dritte Barriere besteht aus dem Ablaugen und der Behandlung eines kleinen Stroms wässriger Lösung, aufgefangen vor und/oder nach der Zinkentnahme im Schritt e) durch eine organische Lösung;
- innerhalb des zweiten Kreislaufs, dem organischen Kreislauf, besteht die vierte Barriere aus einer hochselektiven Zinkentnahme der wässrigen Lösung mit besagtem organischem Lösungsmittel: die fünfte Barriere besteht aus der Behandlung der zinkhaltigen organischen Lösung durch eine physikalisches und chemisches Reinigungssystem; eine sechste Barriere besteht aus der Behandlung zum Säuber der zinkhaltigen organischen Lösung mit einer ultrareinen sauren Lösung, um das Zink aus der ultrareinen organischen Lösung zu strippen; eine siebte Barriere besteht aus dem teilweisen Bleeding und Behandlung der gestrippten organischen Lösung,
- innerhalb des dritten Kreislaufs besteht die achte Barriere aus dem Bleeden eines schmalen Stroms des Endprodukts des Kreislaufs, das in den organischen Kreislauf recycled wird.
**dadurch gekennzeichnet, dass**
- die dritte Barriere gegen die Unreinheiten aus dem Bleeden eines kleinen Stroms neutralisierter zinkhaltiger wässriger Lösung besteht und/oder zinkbefreiter wässriger Lösung aus der Zinkentnahme, die die Neutralisierung durchläuft und/oder Zementationsphasen durch kontrollierte Neutralisierung des Säuregehalts und darauf folgende Zinkausfällung aus der resultierenden wässrigen Lösung und gefolgt von einer Trennung des Festen vom Flüssigen, wonach der feste Rest der Zinkausfällung zur Neutralisierungsphase bei c) des Restmaterials recycled wird und/oder der Lösung, die aus dem Ablaugen des Rohmaterials entsteht und der flüssige Rest wird einer Reinigungsphase durch kontrollierte Neutralisierung unterzogen und zu einer Abreicherungsphase innerhalb des organischen Kreislaufs gebracht, wo der der Zink in dem wässrigen Strom in einem Abreicherungsschritt durch die organische Phase entnommen wird, während die zinkabgereicherte wässrige Lösung aus der Abreicherungsphase zur Neutralisierung und/oder Zementation recycled wird,
- die achte Barriere gegen die Unreinheiten ist das Bleeding eines kleinen Stroms ultrareiner wässriger saurer Lösung, der zu einem Wasch/Säuberungsschritt gesendet wird, um die zinkhaltige organische Lösung zu reinigen und enthält zwischen 0,5 und 5 g/L des entsprechenden H⁺ Und zwischen 0 und 250 g/L Zink.

2. Ein Verfahren gemäss Anspruch 1, **dadurch gekennzeichnet, dass** das Rohmaterial, aus dem der Zink entnommen wird, fest ist, entweder aus Primär- oder Sekundärmaterialien und zwischen 3 un 80% des Gewichts an Zink enthält, der in der chemischen Formel von Oxiden und/oder Salzen und/oder Metall sein kann.

3. Ein Verfahren gemäss Anspruch 1, **dadurch gekennzeichnet, dass** die Rohmaterialien unreine wässrige Zinklösungen mit anderen Kationen und Anionen in variabler Menge sind.

4. Ein Verfahren gemäss Anspruch 1 und 2, **dadurch gekennzeichnet, dass** innerhalb des ersten Keislaufs die erste Barriere gegen die Unreinheiten aus dem Ablaugen des Rohmaterials unter schonenden Bedingungen stattfindet, Bedingungen in Bezug auf Temperatur, Säuregehalt und Verweildauer, um die Löslichkeit der Unreinheiten zu begrenzen und diese in den festen Rohmaterialien beizubehalten.

5. Ein Verfahren gemäss wenigstens einem der Ansprüche 1, 2 und 4, **dadurch gekennzeichnet, dass** die Ablaugebedingungen bei einem pH zwischen 0 und 3,0 gehalten werden vorzugsweise zwischen 1, 5 und 2, 5.

6. Ein Verfahren gemäss wenigstens einem der Ansprüche 1, 2 und 4, **dadurch gekennzeichnet, dass** das Ablaugen bei einer Höchsttemperatur von 95° C stattfindet, vorzugsweise zwischen 45° und 65°.

7. Ein Verfahren gemäss wenigstens einem der Ansprüche 1, 2 und 4, **dadurch gekennzeichnet, dass** das Ablaugen bei einer Verweildauer zwischen 0,5 und 7 Stunden stattfindet, vorzugsweise zwischen 0,5 und 2 Stunden.

8. Ein Verfahren gemäss wenigstens einem der Ansprüche 1 bis 7, **dadurch gekennzeichnet, dass** innerhalb des ersten Kreislaufs die zweite Barriere gegen Unreinheiten aus der Ausfällung mehrerer Unreinheiten besteht, die aus dem Zink abgelaugt wurden und/oder sich in der wässrigen Lösung befinden, indem eine wässrige Lösung neutralisiert wird bei einem kontrollierten pH zwischen 3 und 5, vorzugsweise zwischen 3, 5 und 4, 3, um selektiv jede Unreinheit auszufällen, insbesondere Silikon, Eisen, Aluminium und Antimon und sie aus der Lösung zu entfernen.

9. Ein Verfahren gemäss Anspruch 8, **dadurch gekennzeichnet, dass** die Durchführungstemperatur der Neutralisierungsphase maximal 95°C beträgt und vorzugsweise zwischen 40°C und 60°C beträgt.

10. Ein Verfahren gemäss Anspruch 8, **dadurch gekennzeichnet, dass** die Neutralisierung bei einer Verweildauer zwischen 0,5 und 7 Stunden stattfindet, vorzugsweise zwischen 1 und 4 Stunden.

11. Ein Verfahren gemäss Anspruch 1, **dadurch gekennzeichnet, dass** ein kleiner Strom zinkhaltiger wässriger Lösung aus der Zinkentnahmephase c) und/oder zinkfreie wässrige saure Lösung aus der Zinkentnahmephase e) einer kontrollierter Neutralisierung unterzogen wird, gefolgt von einer Zinkausfällung und darauf folgender Trennung von Festem und Flüssigem, von der der feste Zinkausfällungsrest zur Neutralisierungsphase c) des Restmaterials recycled wird und/oder die Lösung aus dem Ablaugen des Rohmaterials und der flüssige Rest einer Reinigungsphase durch kontrollierte Neutralisierung unterzogen wird.

12. Ein Verfahren gemäss Anspruch 1, **dadurch gekennzeichnet, dass** der kleine Strom der neutralisierten zinkhaltigen wässrigen Lösung aus der Phase c) einer Zementationsphase in der Phase c) unterzogen wird, indem metallisches Zink hinzugefügt wird und die Feststoffe mit den metallischen Feststoffen entfernt werden, gefolgt von einer Zinkausfällung der resultierenden wässrigen Lösung und einer darauf folgenden Trennung von Festem und Flüssigem von der der feste Zinkausfällungsrest zur Neutralisierungsphase c) des Restmaterials recycled wird und/oder die Lösung aus dem Ablaugen des Rohmaterials und der flüssige Rest einer Reinigungsphase durch kontrollierte Neutralisierung unterzogen wird.

13. Ein Verfahren gemäss Anspruch 11, **dadurch gekennzeichnet, dass**:
- ein Rest des kleinen Stroms der zinkhaltigen wässrigen Lösung und/oder die zinkfreie Lösung aus der Entnahme zu der Zinkausfällungsphase geschickt wird/werden, gefolgt von einer Trennung von Festem und Flüssige, wonach die Zinkausfällung zur Neutralisierungsphase c) des Restmaterials und/oder der abgelaugten Lösung aus der Phase des Ablaugens des Rohmaterials recycled wird.
- der andere Rest des kleinen Stroms wird zu einer Neutralisierungs- und/oder Zementationsphase geschickt und, falls der kleine Strom von der zinkfreien, wässrigen sauren Lösung kommt, wird er nach der Neutralisierung optional zur Abreicherungsphase geschickt,
- und die flüssigen Teile, die aus der Zinkausfällung und/oder Neutralisierung und/oder Zementation und/oder Abreicherung entstehen, werden zur Reinigungsphase durch kontrollierte Neutralisierung geschickt.

14. Ein Verfahren gemäss Anspruch 12, **dadurch gekennzeichnet, dass** der pH der kontrollierten Neutralisierungsbehandlung des Säuregehalts mit einem Alkalin-/Zementationswirkstoff mit metallischem Zink zwischen 2, 0 und 4, 0 liegt.

15. Ein Verfahren gemäss einem der Ansprüche 11 bis 13, **dadurch gekennzeichnet, dass** das gelöste Zink in dem kleine Strom in der neutralisierten zinkhaltigen wässrigen Lösung und/oder der zinkfreien wässrigen sauren Lösung aus der Zinkentnahme mit einem alkalinen Wirkstoff bei einem pH zwischen 6, 0 und 8, 0 ausgefällt wird.

16. Ein Verfahren gemäss Anspruch 14 oder 15, **dadurch gekennzeichnet, dass** die Temperatur der Neutralisierung, Zementation und Zinkausfällung zwischen 70°C und 90°C liegt.

17. Ein Verfahren gemäss einem der Ansprüche 1 bis 9, **dadurch gekennzeichnet, dass** die wässrige Lösung mit den Unreinheiten aus dem Bleedingverfahren bei der Neutralisierung, Zementation, Abreicherung und/oder Zinkausfällung mit einem alkalinen Wirkstoff behandelt wird bei einem pH zwischen 8,0 und 12,0, um die Unreinheiten auszufällen, die entfernt werden, während die nach der Trennung der Unreinheiten erhaltene Flüssigkeit in das Verfahren recycled wird.

18. Ein Verfahren gemäss einem der Ansprüche 11 bis 17, **dadurch gekennzeichnet, dass** die Reste der neutralisierten zinkreichen Flüssigkeit und/oder zinkfreien wässrigen sauren Lösung aus der Entnahmephase a) mindestens 25% des Volumens des gesamtens Stroms und vorzugszweise zwischen 8% und 15% des Volumens betragen.

19. Ein Verfahren gemäss einem der Ansprüche 11 bis 18, **dadurch gekennzeichnet, dass** innerhalb des ersten und zweiten Kreislaufes die vierte Barriere gegen die Unreinheiten aus der hochselektiven Entnahme des gelösten Zinks durch eine organische saure Lösung besteht, Phase e), wobei die wässrige Zinklösung zu einem pH zwischen 2,0 und 5,0 und vorzugsweise zwischen 3,5 und 4,3 angereichert wird.

20. Ein Verfahren gemäss einem der Ansprüche 1 bis 19, **dadurch gekennzeichnet, dass** die Entnahme des Zinks in der neutralisierten zinkreichen wässrigen Lösung bei einem Säuregehalt zwischen 0,01 und 3,0 g/l entsprechend H⁺ und bei einer Temperatur zwischen Raumtemperatur und 80°C, vorzugsweise 40°C stattfindet.

21. Ein Verfahren gemäss einem der Ansprüche 1 bis 20, **dadurch gekennzeichnet, dass** die Entnahme des Zinks in der neutralisierten zinkreichen wässrigen Lösung mittels eines organischen sauren Lösungsmittels durchgeführt wird, das in Kerosen gelöst ist, ausgewählt aus einer Gruppe bestehend aus Alkylphosphorsäuren, Alkylphosphonsäuren, Alkylphosphinsäuren und vorzugsweise innerhalb der Gruppe bestehend aus di-(2-Ethylexyl) phosphorsäure (D₂EPHA), di-(2-Ethylexyl) phosphonsäure und di(2,4,4-Trimethylpentyl)phospinsäure.

22. Ein Verfähren gemäss den Ansprüchen 19 bis 21, **dadurch gekennzeichnet, dass** das Verhältnis der Phase zwischen der organischen Lösung und der wässrigen Lösung (Verhältnis ausgedrückt als O/A) zwischen 0,1 und10 liegt und vorzugsweise zwischen 1,0 und 3,0.

23. Ein Verfahren gemäss einem der Ansprüche 1 bis 22, **dadurch gekennzeichnet, dass** die fünfte Barriere gegen die Unreinheiten aus der Behandlung der zinkreichen organischen Lösung aus der Entnahme mit einem doppelten Reinigungssystem, physikalisch und chemische Behandlung (Säubern/Waschen) besteht, angewendet auf die wässrige saure Lösung, um die Unreinheiten aus der wässrigen Phase zu entfernen, die in den organischen Phasen enthalten ist und andere Unreinheiten, die zusammen mit dem Zink entnommen werden.

24. Ein Verfahren gemäss Anspruch 23, **dadurch gekennzeichnet, dass** die physikalische Behandlung aus dem Säubern der organischen Lösung mit dem Zink aus der Entnahme besteht, mit angesäuertem Wasser, das zwischen 0,01 und 4,0 g/L des entsprechenden H⁺ mit einem Verhältnis von organisch/wässrig zwischen 5 und 100, vorzugsweise 15 und 25 besteht.

25. Ein Verfahren gemäss Anspruch 23, **dadurch gekennzeichnet, dass** die chemische Behandlung mit einer wiedergewonnenen angesäuerten Lösung durchgeführt wird, die zwischen 0,1 und 5 g/L des entsprechenden H⁺ enthält.

26. Ein Verfahren gemäss einem der Ansprüche 23 bis 25, **dadurch gekennzeichnet, dass** die physikalische und chemische Reinigung im Gegenstrom durchgeführt werden, in aufeinanderfolgenden Bereichen, die "q" physikalisch und/oder "r" chemisch sind, so dass "r" + "q" wenigstens gleich eins ist, die Anzahl "q" für die Bereiche der physikalischen Reinigung (Säubern) vorzugsweise zwischen 1 und 4 und die Anzahl "r" für die Bereiche der chemischen Behandlung (Waschen) vorzugsweise zwischen 1 und 4 liegen sollten.

27. Ein Verfahren gemäss einem der Ansprüche 1 bis 26, **dadurch gekennzeichnet, dass** die sechste Barriere gegen die Unreinheiten, immer noch im zweiten Kreislauf aus der Behandlung der tragenden organischen Lösung besteht, in der Strippingphase, mit einer wässrigen sauren Lösung, wobei der Säuregehalt zwischen 0,5 und 5 g/L oder dem entsprechenden H⁺ beträgt.

28. Ein Verfahren gemäss Anspruch 27, **dadurch gekennzeichnet, dass** die wässrige saure Lösung, die beim Stripping verwendet wird, höchstens 250 g/L gelösten Zink enthält.

29. Ein Verfahren gemäss einem der Ansprüche 26 bis 28, **dadurch gekennzeichnet, dass** die Behandlungstemperatur zwischen 20°C und 60°C und vorzugsweise zwischen 35°C und 40°C liegt.

30. Ein Verfahren gemäss einem der Ansprüche 1 bis 29, **dadurch gekennzeichnet, dass** innerhalb des zweiten Kreislaufs die siebte Barriere gegen die Unreinheiten das Weiterleiten eines kleinen Bleedingstroms der gestrippten organischen Phase zu einer Regenerierungsphase ist, Behandlung dieser organischen Lösung mit einer Chlorwasserstoffsäurelösung und anschliessendes Recyclen dieser behandelten organischen Entnahme in den Kreislauf.

31. Ein Verfahren gemäss Anspruch 30, **dadurch gekennzeichnet, dass** die Chlorwasserstoffsäurelösung einen Säuregehalt zwischen 2 und 10 mol/L und vorzugsweise zwischen 4 und 8 mol/L aufweist.

32. Ein Verfahren gemäss den Ansprüchen 28 und 31, **dadurch gekennzeichnet, dass** die organische Entnahme, die zur Regenerierung geschickt wird, höchstens 20% des Volumens des Gesamtstroms darstellt und vorzugsweise zwischen 1 % und 5% es Volumens.

## Revendications

1. Un procédé pour la production continuer de composés de zinc électrolytique à pureté ultra-haute ou de zinc à pureté ultra-haute à partir de matières premières contenant du zinc qui peut être extrait par un traitement hydrométallurgique comprenant les étapes suivantes :
a) si la matière première est solide, cette matière première sera lixiviée avec une solution acide aqueuse pour dissoudre le zinc.
b) Optionnellement, en dépendant de la nature de la matière première, si le résidu de lixiviation a quelques éléments précieux, on peut inclure une séparation solide-liquide après la lixiviation.
c) Neutralisation de la solution aqueuse ou pulpe de lixiviation, ou d'une solution chargée en zinc lorsque la matière première contenant du zinc est liquide.
d) Séparation solide-liquide de la solution riche en zinc (solution chargée) des solides (résidus inertes et/ou précipités dans l'étape de neutralisation).
e) Extraction du zinc contenu dans la solution chargée par un solvant d'acide organique
f) Purification du solvant organique chargé en zinc de l'étape d'extraction,
g) désorption du zinc ionique chargé dans le solvant organique par une solution acide aqueuse
h) Récupération du zinc contenu dans la solution acide aqueuse produite à partir de la désorption par extraction par voie électrolytique et/ou cristallisation et/ou précipitation.
Organisées dans trois boucles corrélatives, chacune contenant des barrières combinées successives contre des impuretés.
- dans la première boucle, lixiviation-neutralisation-extraction par solvant et postérieure lixiviation, la première barrière contres les impuretés, consistant à la lixiviation dans des conditions douces ; une seconde barrière consiste au traitement alcalin de la pulpe de matière première et la solution aqueuse ou à la solution aqueuse riche en zinc qui s'origine lors de la lixiviation ; une troisième barrière consiste à la coulée au traitement d'un petit écoulement de solution aqueuse, recueilli avant et/ou après l'extraction de zinc à l'étape e) par un solvant organique ;
- dans la deuxième boucle, la boucle organique, la quatrième barrière consiste à l'extraction de zinc hautement sélective de la solution aqueuse avec ledit solvant organique ; la cinquième barrière consiste au traitement du solvant organique chargé en zinc, a travers un système de purification physique et chimique ; une sixième barrière au traitement de lavage du solvant organique chargé en zinc de la solution organique ultra pure ; une septième barrière consiste à la coulée partielle et au traitement du solvant organique extrait,
- dans la troisième boucle, la huitième barrière consiste à la coulée d'un petit écoulement du produit final qui produit la boucle, qui sera recyclée dans la boucle organique,
**caractérisé en ce que** :
- la troisième barrière contre les impuretés consiste à la coulée d'un petit écoulement de solution aqueuse chargée en zinc neutralisée et/ou la solution aqueuse déchargée de zinc qui s'origine dans l'extraction de zinc qui est soumise aux étapes de neutralisation et/ou cémentation par la neutralisation contrôlée de la solution aqueuse résultante et suivie d'une séparation solide-liquide, à partir de laquelle le motif solide du précipité de zinc est recyclé à l'étape de neutralisation en c) de la pulpe et/ou de la solution qui s'origine lors de la lixiviation de la matière première, et le motif liquide est soumis à une étape d'élimination des impuretés par neutralisation contrôlée et il est envoyé à une étape de déplétion dans la boucle organique, où le zinc présent dans l'écoulement aqueux est extrait dans une étape de déplétion par la phase organique, tandis que la solution aqueuse pauvre en zinc qui s'origine à l'étape de déplétion est recyclée vers la neutralisation et/ou la cémentation,
- la huitième barrière contre les impuretés est la coulée à partir d'un petit écoulement de solution acide aqueuse ultra pure, qui est envoyée à l'étape d'épuration /lavage, pour purifier la solution organique chargée en zinc et qui contient entre 0,5 et 5 g/l d'équivalent de H⁺ et entre 0 et 250 g/l de zinc.

2. Un procédé selon la revendication 1, **caractérisé en ce que** la matière première à partir de laquelle le zinc sera extrait est solide, soit à partie de matières premières ou secondaires, et elle contient entre 3 et 80% en poids de zinc, qui peut être sous la forme chimique d'oxydes et/ou de sels et( de métal.

3. Un procédé selon la revendication 1, **caractérisé en ce que** les matières premières sont des solutions aqueuses de zinc impures, avec d'autres cations et anions dans des quantités variables.

4. Un procédé selon les revendications 1 et 2, **caractérisé en ce que**, dans la première boucle, la première barrière contre les impuretés consiste à la lixiviation sous des conditions douces de la matière première, des conditions en rapport avec la température l'acidité et le temps de séjour, pour limiter la solubilisation des impuretés, en les maintenant dans les matières premières solides.

5. Un procédé selon au moins une des revendications 1, 2 et 4, **caractérisé en ce que** les conditions de lixiviation, sont maintenues à un pH entre 0 et 3,0 et, de préférence, entre 1,5 et 2,5.

6. Un procédé selon au moins une des revendications 1, 2 et 4, **caractérisé en ce que** la lixiviation est réalisée à une température maximale égale à 95°C, de préférence, entre 45°C et 65°C.

7. Un procédé selon au moins une des revendications 1, 2 et 4, **caractérisé en ce que** la lixiviation est réalisée avec un temps de séjour de 0,5 à 7 heures et, de préférence, avec un temps de séjour entre 0,5 y 2 heures.

8. Un procédé selon au moins une des revendications 1 à 7, **caractérisé en ce que**, dans la première boucle, la deuxième barrière contre les impuretés consiste à la précipitation de diverses impuretés, co-lixiviées avec le zinc et ou présentes dans la solution aqueuse, en neutralisant une solution aqueuse à un pH contrôle entre 3 et 5, et de préférence, entre 3,5 et 4,3 pour précipiter sélectivement chaque impureté, en particulier, silice, fer, aluminium et antimoine, en les éliminant de la solution.

9. Un procédé selon la revendication 8, **caractérisé en ce que** la température opérationnelle de l'étape de neutralisation est 95°C, et de préférence, entre 40°C et 60°C.

10. Un procédé selon la revendication 8, **caractérisé en ce que** la neutralisation est réalisée avec un temps de séjour entre 0,5 et 7 heures, de préférence entre 1 et 4 heures.

11. Un procédé selon la revendication 1, **caractérisé en ce qu'**un petit écoulement de la solution aqueuse chargée en zinc qui s'origine à l'étape d'extraction c) d'extraction de zinc et7ou la solution acide aqueuse déchargée de zinc qui s'origine à l'étape e) d'extraction de zinc est soumis à la neutralisation contrôlée par précipitation de zinc et à une séparation postérieure solide-liquide, à partir de laquelle le motif précipité de zinc solide est recyclé à l'étape c) de neutralisation de la pulpe et/ou la solution qui s'origine lors de la lixiviation de la matière première, et le motif liquide est soumis à une étape d'élimination d'impuretés par neutralisation contrôlée.

12. Un procédé, selon la revendication 1, **caractérisé en ce que** le petit écoulement de la solution aqueuse chargée en zinc neutralisée qui s'origine à l'étape c, est soumis à une étape de cémentation en introduisant du zinc métallique et en éliminant le solide avec les impuretés solides, suivie de la précipitation de zinc de la solution aqueuse résultante et une séparation postérieure solide-liquide, à partir de laquelle le motif précipité de zinc solide est recyclé à l'étape de neutralisation en c) de la pulpe et/ou la solution qui s'origine lors de la lixiviation de la matière première, et le motif liquide est soumis à l'étape d'élimination d'impuretés par neutralisation contrôlée.

13. Un procédé selon la revendication 11, **caractérisé en ce que** :
- un motif d'un petit écoulement de la solution aqueuse chargée en zinc neutralisée et/ou la solution acide aqueuse déchargée de zinc qui s'origine dans l'extraction, est/sont envoyés à l'étape de précipitation de zinc, suivie d'une séparation solide-liquide après laquelle, le précipité de zinc est recyclé à l'étape de neutralisation c) de la pulpe et/ou la solution lixiviée qui s'origine lors de l'étape de lixiviation de la matière première.
- L'autre motif de l'écoulement est envoyé à l'étape de neutralisation et/ou cémentation, et au cas où le petit écoulement proviendrait de la solution acide aqueuse, déchargée de zinc, après la neutralisation, il est envoyé optionnellement à l'étape de déplétion.
- Et les fractions liquides, qui résultent de la précipitation et /ou neutralisation et/ou cémentation et/ou déplétion sont envoyées à l'étape d'élimination des impuretés par neutralisation contrôlée.

14. Un procédé selon la revendication 12, **caractérisé en ce que** le pH du traitement de neutralisation contrôlée de l'acidité avec un agent alcalin/de cémentation avec du zinc métallique, est entre 2,0 et 4,0.

15. Un procédé selon l'une quelconque des revendications 11 à 13, **caractérisé en ce que** le zinc en solution dans le petit écoulement dans la solution aqueuse chargée en zinc neutralisée et/ou la solution acide aqueuse déchargée de zinc qui s'origine lors de l'extraction de zinc, est précipité avec un agent alcalin à un pH entre 6,0 et 8,0.

16. Un procédé selon une des deux revendications, 14 et 15, **caractérisé en ce que** la température du traitement de neutralisation, cémentation et précipitation de zinc est entre 70°C et 90°C.

17. Un procédé selon l'une quelconque des revendications 1 à 9, **caractérisé en ce que** la solution aqueuse qui contient des impuretés, qui s'origine, par le traitement de coulée, lors de la neutralisation, cémentation, déplétion et/ou précipitation de zinc, est traitée avec un agent alcalin, à un pH entre 8,0 et 12,0 pour précipiter les impuretés qui sont éliminées, tandis que le liquide obtenu après la séparation des impuretés est recyclé dans le procédé.

18. Un procédé selon l'une quelconque des revendications 11 à 17, **caractérisé en ce que** les motifs de liquide riche en zinc neutralisée et/ou en solution acide aqueuse déchargé de zinc, qui s'origine lors de l'étape d'extraction e), représente, au maximum, 25% du volume de l'écoulement total, et, de préférence, entre 8% et °5% en volume.

19. Un procédé selon l'une quelconque des revendications 1 à 18, **caractérisé en ce que**, dans la première boucle et la deuxième boucle, la quatrième barrière contre les impuretés consiste à l'extraction hautement sélective de zinc dissout, par un solvant acide organique, étape e) qui alimente la solution de zinc aqueux neutralisée à un pH entre 2,0 et 5,0 et, de préférence, entre 3,5 et 4,3.

20. Un procédé selon l'une quelconque des revendications 1 à 19, **caractérisé en ce que** l'extraction du zinc contenu dans la solution aqueuse riche en zinc neutralisée, a lieu dans une gamme d'acidité entre 0,01 et 3,0 g/l d'équivalent de H⁺ et à une température entre la température ambiante et 80°C, de préférence 40°C.

21. Un procédé selon l'une quelconque des revendications 1 à 20, **caractérisé en ce que** l'extraction du zinc contenu dans la solution aqueuse riche en zinc neutralisée, est réalisée en utilisant un solvant acide organique, dissout dans du kérosène, choisi parmi le groupe constitué par des acides phosphoriques d'alkyle, des acides phosponiques d'alkyle, des acides phosphiniques d'alkyle et de préférence dans le groupe constitué par acide di-(2-éthylhexyl) phosphorique (D₂EPHA), acide di-(2-ethylhexyl) phosphonique et acide di-(2,4,4-triméthylpentyl) phosphinique.

22. Un procédé selon les revendications 19 et 21, **caractérisé en ce que** le ratio des phases entre le solvant organique et la solution aqueuse (ratio écrite comme O/A) es entre 0,1 et 10, et de préférence, entre 1,0 et 3,0.

23. Un procédé selon l'une quelconque des revendications 1 '22, **caractérisé en ce que** la cinquième barrière contre les impuretés consiste au traitement du solvant organique chargé en zinc de l'extraction, avec un système de double purification, traitement physique et chimique (épuration/lavage), utilisé dans la solution acide aqueuse pour éliminer les impuretés de la phase aqueuse entraînées dans les phases organiques, et d'autres impuretés co-extraites avec le zinc.

24. Un procédé selon la revendication 23, **caractérisé en ce que** le traitement physique consiste à laver le solvant organique avec du zinc de l'extraction, avec l'eau acidulée contenant entre 0,01 et 4,0 g/l d'équivalent de H⁺, avec un ratio organique/aqueux entre 5 et 100, et de préférence, entre 15 et 75.

25. Un procédé selon la revendication 23, **caractérisé en ce que** le traitement chimique est réalisé avec une solution acidulée recyclée contenant entre 0,1 et 5 g/l d'équivalent de H⁺.

26. Un procédé selon l'une quelconque des revendications 23 à 25, **caractérisé en ce que** la purification physique et chimique est réalisée à contre-courant, dans des zones successives qui sont « q » physique et7ou « r » chimique, de manière que « r » + « q » devrait être au moins égal à un, le nombre « q » pour les zones de traitement de purification physique (épuration) devrait être de préférence entre 1 et 4 et le nombre « r » pour les zones de traitement de purification chimique (lavage) devrai être de préférence entre 1 et 4.

27. Un procédé selon l'une quelconque des revendications 1 à 26, **caractérisé en ce que** la sixième barrière contre les impuretés, encore dans la deuxième boucle, consiste au traitement des solvants organiques chargés, lors de l'étape d'extraction, avec une solution acide aqueuse dans laquelle l'acidité est entre 0,5 et 5 g/l ou équivalent de H⁺.

28. Un procédé selon la revendication 27, **caractérisé en ce que** la solution acide aqueuse utilisée dans l'extraction contient un maximum de 250 g71 de zinc dissout.

29. Un procédé selon l'une quelconque des revendications 26 à 28, **caractérisé en ce que** la température de traitement est entre 20°C et 60°C et, de préférence entre 35°C et 40°C.

30. Un procédé selon l'une quelconque des revendications 1 à 29, **caractérisé en ce que**, dans cette seconde boucle, la septième barrière contre les impuretés est celle envoyée à partir d'un petite écoulement de coulée de la phase organique extraite à la phase de régénération, en traitant cette solution organique avec une solution d'acide chlorhydrique, et en recyclant par conséquent cette coulée organique traitée au circuit.

31. Un procédé selon la revendication 30, **caractérisé en ce que** la solution d'acide chlorhydrique a une acidité entre 2 et 10 mol/l et de préférence, entre 4 et 8 mol/l.

32. Un procédé selon les revendications 28 et 31, **caractérisé en ce que** la coulée organique envoyée à la régénération représente, au maximum, 20% du volume de l'écoulement total et de préférence, entre 1 % et 5% en volume.
